(19) **Europäisches Patentamt**

**European Patent Office**

**Office européen des brevets**

(11) Veröffentlichungsnummer: **0 305 852 B1**

(12) **EUROPÄISCHE PATENTSCHRIFT**

(45) Veröffentlichungstag der Patentschrift: **23.12.92**

(21) Anmeldenummer: **88113659.2**

(22) Anmeldetag: **23.08.88**

(51) Int. Cl.⁵: **C09K 3/10**, C09K 21/00, E04D 5/10

(54) Verfahren zur Herstellung brandgeschützter Dichtungsbahnen.

(30) Priorität: **01.09.87 DE 3729143**

(43) Veröffentlichungstag der Anmeldung:
**08.03.89 Patentblatt 89/10**

(45) Bekanntmachung des Hinweises auf die
Patenterteilung:
**23.12.92 Patentblatt 92/52**

(84) Benannte Vertragsstaaten:
**AT DE ES FR GB IT SE**

(56) Entgegenhaltungen:
**EP-A- 0 157 155**
**AT-B- 360 130**
**DE-C- 3 200 035**

(73) Patentinhaber: **Dr. Wolman GmbH**
**Postfach 11 60**
**W-7573 Sinzheim(DE)**

(72) Erfinder: **Stanek, Richard, Dr. Dipl.-Chem.**
**Wuermersheimer Strasse 35**
**W-7552 Durmersheim(DE)**
Erfinder: **Becker, Wolfram, Dipl.-Ing.**
**Im Kaestenbusch 15**
**W-6730 Neustadt(DE)**
Erfinder: **Heidenreich, Hans-Peter**
**Heiligensteinstrasse 3**
**W-7570 Baden-Baden 23(DE)**

(74) Vertreter: **Springer, Hans Jörg, Dr. et al**
**BASF Aktiengesellschaft Patentabteilung**
**Carl-Bosch-Strasse 38**
**W-6700 Ludwigshafen(DE)**

## Beschreibung

Die vorliegende Erfindung betrifft ein Verfahren zur Herstellung brandgeschützter Dichtungsbahnen aus hochpolymeren, thermoplastischen und elastomeren Kunststoffen.

Anstelle der konventionellen bitumösen Dichtungsbahnen (Dachpappen) werden im Baugewerbe, insbesondere im Flachdachbereich, zunehmend hochpolymere Kunststoffbahnen eingesetzt. Die durch Extrudieren oder Kalandrieren produzierten Bahnen gehören entweder zur Gruppe der Plastomeren (Thermoplasten) oder Elastomeren (Kautschukbahnen). Als Vertreter der ersteren Gruppen sollen hier beispielhaft die ECB (Ethylencopolymerisat-Bitumen)-, PIB (Polyisobutylen)-, PVC (Polvinylchlorid)-, PEC (chloriertes Polyethylen)- und EVA (Ethylen-Vinylacetat)-Bahnen benannt werden. Zu der Gruppe der Elastomeren gehören u.a. die CR (Polychloropren-Kautschuk)-, NBR (Nitril-Kautschuk)-, CSM (chlorsulfoniertes Polyethylen)- und IIR (Butylkautschuk)Bahnen.

Die hochpolymeren Dichtungsbahnen werden vorwiegend in Stärken von 1 - 2,5 mm produziert, was einem Flächengewicht von 1,4 - 2,4 kg/m$^2$ und einer Brandlast von 30 - 92 MJ/m$^2$ entspricht.

Um das Brandverhalten der Dichtungsbahnen, insbesondere bei Verwendung im Dachbereich zu verbessern, wurden verschiedene Alternativen vorgeschlagen und auch teilweise in der Praxis verwertet.

Eine bedeutende Verbesserung des Brandverhaltens kann über eine direkte Einarbeitung von brandschützenden Komponenten erreicht werden.

Die brandschützenden Komponenten können anstelle der vom Brandverhalten passiv wirkenden Füllstoffe oder auch zusätzlich in die Masse eingearbeitet werden. Als brandschützende Komponente kann z.B. eine synergistische Mischung von Aluminiumhydroxid und rotem Phosphor eingesetzt werden.

Die für eine deutliche Verbesserung des Brandverhaltens der Dichtungsbahnen benötigten Brandschutzkomponenten liegen in einer derartigen Größenordnung, daß die mechanischen Eigenschaften, wie Flexibilität, Reißfestigkeit, Reißdehnung u.a. nachhaltig verschlechtert werden.

Diese Verschlechterung der mechanischen Eigenschaften vermindert auch sehr stark die Standzeit der Dichtungsbahnen. Diese Erkenntnisse haben dazu beigetragen, daß die Methode nicht in der Praxis verwendet wird.

Eine andere Möglichkeit zur Verbesserung des Brandverhaltens besteht in der Unterlegung mit einem anorganischen Material, z.B. Asbestpappe, Glasvlies oder Glasfilz, so wie sie in der DE-AS 23 49 666 beschriebnen ist. Die Brandschutzlage aus nicht brennbarem Fasermaterial übt dabei eine rein passive Schutzwirkung aus, wodurch unter gewissen Umständen der Durchbrand in die darunter liegende Dämmschicht vermieden werden kann.

So werden z.B. die Rohglasvliesbahnen sowohl als Trennlage wie auch als sogennantes "Hitzeschild" verwendet und bieten einen nur relativ geringen Schutz, da die dünnen Fasern unter Hitzeeinwirkung schnell schmelzen und sintern. Die Ausbreitung eines Lokalbrandes, insbesondere unter Windeinwirkung, wird durch diese passiv wirkende Unterlage nicht verhindert.

In der Patentschrift DE 32 20 821 wird deshalb eine brandgeschützte Dichtungsbahn beschrieben, deren Brandschutzlage aus anorganischem Fasermaterial mit Stoffen versehen ist, die im Brandfall durch Abspaltung von Wasserdampf und unbrennbaren Gasen das Brandgeschehen aktiv beeinflussen. Die nach dieser Erfindung gefertigten Brandschutzlagen werden unter dem Begriff "Brandschutzvlies" oder "Flammschutzbahn" auf dem Markt vertrieben.

Als Trägermaterial dient hier Glasvlies, das mit brandschützenden Komponenten beschichtet ist. Da diese Brandschutzbahnen im Dachbereich gleichzeitig die Funktion einer Trennschicht zwischen der Dichtungsbahn und der Dämmschicht wahrnehmen, werden sie lose auf der letzteren verlegt. Nachteilig wird der damit verbundene zusätzliche Arbeitsgang empfunden.

Auch die im Vergleich zu den in die Kunststoffbahnen eingebetteten, passiven Brandschutzlagen erforderliche doppelte Lagerhaltung sowie der unter Praxisbedingungen sehr umständliche Schutz vor Regen und Witterungseinflüssen behindert eine größere Ausbreitung dieser Produkte.

Neben den anorganischen Trennschichten oder Unterlagen kommen auch zunehmend organische Fasermaterialien, z.B. in Form von Polyestermatten, Polypropylenvliesen und dgl. zum Einsatz.

Die im Vergleich zu anorganischen Fasermaterialien wesentlich besseren mechanischen Eigenschaften werden hier durch das schlechtere Brandverhalten aufgewogen. Diese Verschlechterung resultiert nicht nur aus der Vergrößerung der Brandlast (bis 250 - 300 g/m$^2$), sondern vor allem durch die Dichtwirkung des Vliesmaterials im Brandfall.

Der Erfindung liegt die Aufgabe zugrunde, die aktiven Brandschutzkomponenten derart in die Dichtungsbahn einzuarbeiten, daß die Nachteile der bisher bekannten Schutzmethoden vermieden werden können.

Durch eine Anreicherung der Brandschutzkomponenten an einer oder beiden Oberflächen der Dichtungsbahn, bei gleichzeitiger Kaschierung der behandelten Oberfläche mit einem anorganischen oder organischen Vlies und/oder Gewebe und/oder Matte und/oder Folie konnte die gestellte Aufgabe zufriedenstellend gelöst werden. Unerwartet zeigte sich dabei, daß auch bei Verwendung organischer Kaschierungsmaterialien die Dichtungsbahnen eine ausreichende Widerstandsfähigkeit gegen Feuer und strahlende Wärme nach DIN 4102 Teil 7 aufweisen.

Gegenstand der Erfindung ist somit ein Verfahren zur Herstellung brandgeschützter plastomerer oder elastomerer Dichtungsbahnen, das dadurch gekennzeichnet ist, daß die vorzugsweise durch Extrudieren oder Kalandrieren frisch gefertigten, noch heißen Dichtungsbahnen mit den brandschutzaktiven Komponenten bei einem Temperaturbereich kaschiert werden, der über der Erweichungstemperatur der Dichtungsbahnen, aber unter der Initialtemperatur liegt und mit einem organischen und/oder anorganischen Material abgedeckt werden.

Die nach dem erfindungsgemäßen Verfahren hergestellten Dichtungsbahnen zeigen im Vergleich zu den konventionellen Standardbahnen keine Verschlechterung der mechanischen Festigkeiten. Je nach Zusammensetzung der brandschützenden Komponenten, kann bei den einzelnen Varianten sogar eine erhebliche Verbesserung der mechanischen Festigkeitswerte festgestellt werden. Dies dürfte sich natürlich positiv auf die Standzeiten der verlegten Dichtungsbahnen auswirken. Die Abdeckung der brandschützenden Komponenten durch die Kaschierungsmaterialien verbessert die Beständigkeit gegenüber Witterungseinflüssen und erleichtert damit die Verlegung bei schlechten Witterungsverhältnissen.

Der Begriff "aktive Brandschutzkomponenten" bezieht sich auf alle Materialien, die im Gegensatz zu den unbrennbaren, im Brandfall sich "passiv" verhaltenen Materialien, das Brandgeschehen "aktiv" beinflussen.

Diese Beeinflussung kann beispielhaft durch Abspaltung von Radikalen, die sich an die freien Valenzen der Reaktionsketten in der Flammenzone anlagern und dadurch den Vorgang des Brennens unterbrechen, stattfinden. Die "aktive" Beeinflussung des Brandgeschehens kann auch durch Abspaltung von unbrennbaren Gasen, wie Kohlendioxid, Stickstoff, Wasserdampf, die die Konzentration des Sauerstoffes am Brandherd herabsetzen, geschehen. Durch diese endothermen Reaktionen wird dem Brandherd gleichzeitig Wärme entzogen, was insbesondere bei Abspaltung von chemisch oder physikalisch gebundenem Wasser (Kristallwasser) der Fall ist. Eine "aktive" Brandschutzwirkung kann auch durch Bildung einer hitzebeständigen Schaumschicht erfolgen. Insbesondere die sogenannten Intumeszenzmaterialien (DSB-Dämmschichtbildner) vereinigen oft mehrere der aufgeführten "aktiven" Brandschutzeigenschaften.

Das Brandverhalten der erfindungsgemäßen Dichtungsbahnen wurde anhand der Anforderungen nach DIN 4102 Teil 7, d.h. als Nachweis der Widerstandsfähigkeit gegen Flugfeuer und strahlende Wärme ermittelt. Dabei wurde jeweils ein leichter Flachdachaufbau, bestehend aus Stahltrapezbleck, Styropor-Dämmschicht (15 cm stark) und der entsprechenden Dichtungsbahn getestet. Das ganze Paket wurde mechanisch mit dem Stahltrapezblech verbunden und die Überlappungen der Dichtungsbahn entweder heißluftverschweißt oder verklebt. Dieser Flachdachaufbau mit den Flächenabmessungen von 2,5 x 2 m wurde jeweils bei einer Neigung von 15° und 45° mit der vorgesehenen Menge von Holzwolle beflammt.

Das erfindungsrechte Verfahren soll anhand mehrerer Praxisversuche erläutert werden, wobei die Beispiele 1.1. und 2.1 sich auf die nicht brandgeschützten Standardversionen beziehen.

Beispiel 1.1

Eine ECB-Bahn wurde auf einem konventionellen Extruder bei einer Verarbeitungstemperatur von 140 - 160°C gefertigt. Das Extrudat wird auf verchromten, gekühlten Walzen geglättet, wobei die 2,0 mm starke, 1,04 m breite Bahn und ca. 70 - 90° heiße Bahn unterseitig mit 50 g/m² starkem Glasvlies und die Oberseite mit einer eingefärbten Polyethylenfolie (50 µm) kaschiert wird. Die Kaschierung der Unterseite mit Glasvlies soll die Dimmensionsstabilität erhöhen, die Haftung bei vollflächiger Verklebung verbessern und ein Durchschmelzen der Bahn beim Verkleben mit Heißbitumen verhindern.

Die Kaschierung der Oberseite mit der PE-Folie soll das Verblocken der aufgerollten Bahnen verhindern.

Beim Brandtest nach DIN 4102 Teil 7 zeigte sich relativ schnell, daß die aus 50 g/m² starkem Glasvlies bestehende, unbrennbare Unterlage den Durchbrand der ECB-Bahn und ein Entzünden der darunter liegenden Styropor-Dämmschicht nicht verhindern konnte. Sowohl bei 15° wie auch 45° Neigung mußte der Flachdachaufbau jedesmal abgelöscht werden.

Beispiel 1.2

Eine ECB-Bahn wurde auf der selben Anlage und unter analogen Bedingungen wie zuvor im Beispiel 1.1 beschrieben produziert. Abweichend wird das heiße Extrudat vor der Kaschierung über zwei Bürstenrollen beidseitig mit einem feinpulvrigen Intumeszenzpulver (DSB-Dämmschichtbildner) bepudert. Als Intumeszenzpulver kann beispielshaft die bekannte Mischung aus gleichen Anteilen von Kartoffelstärke. Pentaerythrit, Diammoniumphosphat und Dicyandiamid verwendet werden. Die Aufbringmengen betrugen ca. 100 g/m² auf der Oberseite und ca. 200 g/m² auf der Unterseite der ECB-Bahn.

Durch die anschießende Kaschierung werden die Brandschutzkomponenten auf der ECB-Oberfläche fest verankert. Die Kaschierung erfolgte wie üblich auf der Oberseite mit einer PE-Folie und auf der Unterseite mit einem 50 g/m² starken Glasvlies.

Die Überprüfung der mechanischen Eigenschaften der so hergestellten Dichtungsbahnen ergaben keine relevanten Unterschiede zu den üblichen Werten.

Das Brandverhalten wurde anhand des schon im Beispiel 1.1. beschriebenen Flachdachaufbaues getestet.

Die nach DIN 4102 Teil 7 durchgeführten Brandversuche ergaben, daß Flachdachaufbauten mit der brandgeschützten ECB-Bahn die Anforderungen bezüglich Widerstandsfähigkeit gegen Flugfeuer und strahlende Wärme sowohl bei einer Dachneigung von 15° wie auch 45° erfüllen.

Beispiel 1.3

Eine ECB-Bahn wurde auf derselben Anlage und unter analogen Bedingungen wie in 1.1 beschrieben gefertigt. Abweichend wurde diesmal für die Unterkaschierung ein Glasvlies mit 70 g/m² verwendet. Dieses Glasvlies wird vor der Kaschierung mit einer flüssigen Intumenszenzpaste (Auftragsmenge ca. 500 g/m² naß) beschichtet, über einem 6 m langen Kammerofen getrocknet und anschließend mit dem heißen Extrudat kaschiert.

Die mechanischen Eigenschaften dieser brandgeschützten Version (insbesondere die Reißfestigkeit) sind deutlich besser als die der Standardversion.

Die Brandversuche nach DIN 4102 Teil 7 mit denselben Flachdachaufbauten wie in den Beispielen 1.1 und 1.2 beschrieben ergaben ein positives Testergebnis bei einer 15° Dachneigung und ein negatives Ergebnis bei einer 45° Dachneigung. Beim letzteren Versuch wurde ein brennendes Ablaufen von über 50 cm festgestellt, aber ein Durchbrand in die Dämmschicht fand nicht statt.

Beispiel 1.4

Auch diesmal wurde eine ECB-Bahn auf derselben Anlage und unter analogen Bedingungen wie in Beispiel 1.1 beschrieben gefertigt.

Die Unterseite des heißen Extrudats wurde wie üblich mit einem 50 g/m² starken Glasvlies kaschiert. Die Oberseite wurde aber abweichend (statt einer Kaschierung mit PE-Folie) mit einem wasserunlöslichen Intumeszenzpulver bepudert. Die in der Intumeszenzmischung enthaltenen

Wachse und Harze gewährleisten eine dauerhafte Verbindung mit der ECB-Bahn und bilden gleichzeitig einen flexiblen Film über der Pulverschicht.

Aufbringmengen: ca. 200 g/m²

Die mechanischen Eigenschaften dieser Variante sind mit denen der Standardbahnen vergleichbar.

Die Brandversuche nach DIN 4102 Teil 7 erfolgten mit Flachdachaufbauten, wie sie zuvor schon in den Beispielen 1.2 - 1.3 beschrieben wurden.

Das Prüfergebnis bei einer Dachneigung von 15° war positiv und bei einer Neigung von 45° negativ. Ausschlaggebend für die letztere Bewertung war diesmal eine geringfügige Durchlöcherung von ca. 1,5 cm², wobei das brennende Ablaufen im Rahmen des zulässigen Grenzwertes blieb.

Beispiel 2.1

Eine Polyvinylchlorid-Dichtungsbahn vom Typ PVC-P wird zunächst als Schlauch extrudiert, aufgeschnitten und einseitig mit einer Polyestermatte (ca. 220 g/m² Flächengewicht) verklebt.

Das Brandverhalten dieser Dichtungsbahn wurde anhand eines zuvor beschriebenen, leichten Flachdachbaues, bestehend aus Stahltrapezbleck, Styropor-Dämmplatten, 15 cm stark, und der gefertigten PVC-P-Dichtungsbahn gemäß den Anforderungen nach DIN 4102 Teil 7 geprüft.

Das Ergebnis der Prüfung war negativ, da direkt unter dem Holzwollekorb die Dichtungsbahn mitsamt der Polyesterunterlagen durchbrannte und das Feuer in die darunterliegende Styroporschicht geleitet wurde.

**Patentansprüche**

1. Verfahren zur Herstellung brandgeschützter plastomerer oder elastomerer Dichtungsbahnen, dadurch gekennzeichnet, daß die vorzugsweise durch Extrudieren oder Kalandrieren frisch gefertigten, noch heißen Dichtungsbahnen mit den brandschutzaktiven Komponenten bei einem Temperaturbereich kaschiert werden, der über der Erweichungstemperatur der Dichtungsbahnen, aber unter der Initialtemperatur liegt und mit einem organischen und/oder anorganischen Material abgedeckt werden.

2. Verfahren nach Anspruch 1, dadurch gekennzeichnet, daß die vorzugsweise durch Extrudieren oder Kalandrieren frisch gefertigten, noch heißen Dichtungsbahnen mit den brandschutzaktiven Komponenten und den Abdeckungsmaterialien bei einem Temperaturbereich kaschiert werden, der über der Erweichungstemperatur der Dichtungsbahnen, aber unter der Initialtemperatur der brandschutzaktiven Komponenten liegt.

3. Verfahren nach Anspruch 1 und 2, dadurch gekennzeichnet, daß die brandschutzaktiven Komponenten zunächst auf die als Abdeckungsmaterialien benutzten anorganischen und/oder organischen Matten, Vliese oder Folien aufgetragen werden und ausschließlich mit den heißen Dichtungsbahnen kaschiert werden.

**Claims**

1. A process for manufacturing fireproofed plastomeric or elastomeric sealing strips, wherein the as-fabricated, preferably as-extruded or as-calendered, still hot sealing strips are laminated with the actively fireproofing components within a temperature range above the softening temperature of the sealing strips but below the initiation temperature and covered with an organic and/or inorganic material.

2. A process as claimed in claim 1, wherein the as-fabricated, preferably as-extruded or as-calendered, still hot sealing strips are laminated with the actively fireproofing components and the covering materials within a temperature range above the softening temperature of the sealing strips but below the initiation temperature of the actively fireproofing components.

3. A process as claimed in claim 1 or 2, wherein the actively fireproofing components are initially applied to the inorganic and/or organic mats, batts or films/sheets used as covering materials and laminated only with the hot sealing strips.

**Revendications**

1. Procédé de préparation de bandes d'étanchéité plastomères ou élastomères, protegées contre le feu, caractérisé par le fait que les bandes d'étanchéité, encore chaudes, fraichement fabriquées, avantageusement par extrusion ou calandrage, sont revêtues avec les composants à action protectrice du feu, dans une zone de températures située au-dessus de la température de ramollissement des bandes d'étanchéité, mais inférieure à la température initiale, et sont recouverts d'un matériau organique et/ou inorganique.

2. Procédé selon la revendication 1, caractérisé par le fait que les bandes d'étanchéité, encore chaudes, fraichement fabriquées, avantageusement par extrusion ou calandrage, sont revêtues avec les composants à action protectrice du feu et les matériaux de recouvrement, dans une zone de températures située au-dessus de la température de ramollissement des bandes d'étanchéité, mais inférieure à la température initiale des composants à action protectrice du feu.

3. Procédé selon l'une des revendications 1 ou 2, caractérise par le fait que les composants à action protectrice du feu sont appliques d'abord sur les mats, voiles ou feuilles organiques et/ou inorganiques utilisés comme matériaux de recouvrement et sont ensuite revêtus avec les bandes d'étanchéité chaudes.